# EUROPÄISCHE PATENTSCHRIFT

(11) **EP 2 245 759 B1**
(45) Veröffentlichungstag und Bekanntmachung des Hinweises auf die Patenterteilung: **14.12.2016**
(21) Anmeldenummer: 08805253.5
(22) Anmeldetag: 13.10.2008
(51) Int. Cl.: H04L 27/26, H04B 7/08

(54) **VERFAHREN UND VORRICHTUNG ZUM EMPFANGEN EINES DATENSIGNALS MIT MEHREREN ANTENNEN**
METHOD AND DEVICE FOR RECEIVING A DATA SIGNAL USING A PLURALITY OF ANTENNAE
PROCÉDÉ ET DISPOSITIF POUR RECEVOIR UN SIGNAL DE DONNÉES AVEC PLUSIEURS ANTENNES

(30) Priorität: 05.12.2007 DE 102007058520
(43) Veröffentlichungstag der Anmeldung: 03.11.2010
(73) Patentinhaber: Robert Bosch GmbH, 70442 Stuttgart (DE)
(72) Erfinder: HOFMANN, Frank, 31139 Hildesheim (DE)
(86) Internationale Anmeldenummer: PCT/EP2008/063722
(87) Internationale Veröffentlichungsnummer: WO 2009/071362

(56) Entgegenhaltungen:
- EP-A- 1 148 684
- EP-A- 1 396 947
- EP-A- 1 533 917
- US-A1- 2006 067 442

## Beschreibung

Die vorliegende Erfindung betrifft ein Verfahren gemäß Patentanspruch 1 und eine Schaltungsanordnung gemäß Patentanspruch 10.

### Stand der Technik

Im Stand der Technik ist es bekannt, ein Datensignal mit mehreren Antennen gleichzeitig zu empfangen und die Antenne mit dem stärksten Empfangssignal auszuwählen und deren Empfangssignal weiterzuverarbeiten.

Aus DE 600 32 408 T2 ist ein Diversitätsempfänger für OFDM-Burst-Signalübertragung bekannt. Bei dieser Anordnung sind mehrere Antennen vorgesehen, die über einen Auswahlschalter mit einem Empfänger verbunden sind. Der Empfänger weist eine Syntheseschaltung, eine Frequenzumsetzschaltung und eine OFDM-Demodulationsschaltung auf. Anhand des umgesetzten Frequenzsignals wird eine Empfangspegelmessung durchgeführt. Dabei werden der Empfangspegel der verschiedenen Antennen erfasst und es wird die Antenne für die weitere Verarbeitung des Empfangssignals ausgewählt, deren Empfangspegel am größten ist. Zur Auswahl der Antenne weist das OFDM-Signal ein spezielles Preamble-Signal für die Auswahl der Antenne auf.

Die EP1533917A offenbart einen Umschalter zwischen mehreren Antennen, der im Empfangsbetrieb diejenige Antenne auswählt, die das stärkste Signal aufweist.

Die US2006/067442A1 beschreibt eine Vorrichtung, die anhand einer Bewertung ein Signal eines drahtlosen Mikrofons bewertet und anhand der Bewertung gegebenenfalls zu einem anderen Mikrofon umschaltet.

Die EP1148684A offenbart einen Empfänger für digitalen Rundfunk, der über eine Umschaltfunktion zwischen mehreren Antennen verfügt, um ungewünschte Übertragungsausfälle zu vermeiden.

Die EP1396947A beschreibt ein Verfahren, das einen Übertragungskanal aus mehreren Übertragungskanälen anhand der geringsten Fehlerrate auswählt.

### Offenbarung der Erfindung

Eine Aufgabe der vorliegenden Erfindung besteht darin, ein verbessertes Verfahren und eine verbesserte Schaltungsanordnung zum Empfangen und zur Verarbeitung eines Datensignals mit mehreren Antennen bereitzustellen.

Diese Aufgabe wird durch das Verfahren gemäß Patentanspruch 1 und durch die Schaltungsanordnung gemäß Patenanspruch 9 gelöst.

Ein Vorteil des erfindungsgemäßen Verfahrens besteht darin, dass der Zeitpunkt für die Auswahl der Antennen so gewählt wird, dass die Verarbeitung der Nutzdaten des Datensignals kaum oder gar nicht beeinträchtigt wird. Dieser Vorteil wird dadurch erreicht, dass außerhalb des Empfangs der Nutzdaten eine Überprüfung der Empfangsqualität der Antennen und/oder eine Auswahl der Antenne mit der besseren Empfangsqualität durchgeführt wird. Auf diese Weise wird eine direkte Verarbeitung der Nutzdaten nicht beeinträchtigt.

Weitere vorteilhafte Ausführungsformen der Erfindung sind in den abhängigen Ansprüchen angegeben.

Das beschriebene Verfahren eignet sich insbesondere bei einem OFDM-Signal.

In einer Weiterbildung des Verfahrens kann die Überprüfung der Empfangsqualität während des Empfangs eines Datenrahmens öfters durchgeführt werden. Auf diese Weise wird eine optimierte Auswahl der Antenne während eines Datenrahmens ermöglicht.

In einer weiteren Ausführungsform werden alle vorhandenen Antennen bei der Überprüfung der Empfangsqualität überprüft. Somit wird sichergestellt, dass die optimale der zur Verfügung stehenden Antennen ermittelt wird.

Erfindungsgemäß wird die zeitliche Lage des Nutzintervalls ermittelt und abhängig von der zeitlichen Lage des Nutzintervalls wird die Überprüfung der Empfangsqualität durchgeführt. Da die Überprüfung vor dem Nutzintervall, d. h. während des Schutzintervalls erfolgt, und die zeitliche Lage

zwischen dem Nutzintervall und dem Schutzintervall bekannt ist, reicht die Ermittlung der zeitlichen Lage des Nutzdintervalls aus, um die zeitliche Position für die Überprüfung der Empfangsqualität festlegen zu können. Somit ist es nicht erforderlich, die zeitliche Lage des Schutzintervalls selbst zu ermitteln.

In einer weiteren Ausführungsform wird als bessere Empfangsqualität ein größerer Empfangspegel der Antenne angesehen.

In einer weiteren Ausführungsform wird neben der Empfangsqualität der Antennen auch die Empfangsqualitäten der anderen Antennen berücksichtigt.

Die Erfindung wird im Folgenden anhand der Figuren näher erläutert. Es zeigen:
Figur 1 eine schematische Anordnung zum Empfang eines Datensignals mit mehreren Antennen; und
Figur 2 eine schematische Darstellung des Aufbaus eines Datensignals.

### Ausführungsformen der Erfindung

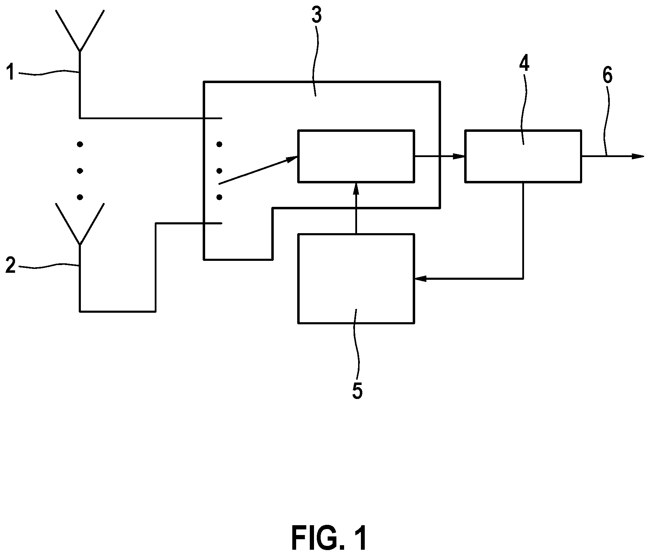

Figur 1 zeigt eine schematische Darstellung mehrere Antennen 1, 2, die mit einem Auswahlschalter 3 verbunden sind. Der Auswahlschalter 3 steht mit einer Empfangsschaltung 4 in Verbindung. Weiterhin ist die Empfangsschaltung 4 mit einer Steuereinheit verbunden. Die Steuereinheit 5 ist wiederum mit dem Auswahlschalter 3 verbunden. In der gewählten Darstellung sind nur zwei Antennen 1, 2 dargestellt, obwohl eine Vielzahl von Antennen vorgesehen sein können. Die Antennen sind zum Empfang eines Signals, insbesondere eines Datensignals vorgesehen, wobei Empfangsleitungen der Antennen über den Auswahlschalter 3 mit der Empfangsschaltung 4 verbunden werden können. Durch die Anordnung des Auswahlschalters 3 ist es möglich, eine der Antennen auszuwählen und das Empfangssignal der ausgewählten Antenne an die Empfangsschaltung 4 weiterzuleiten. Die Empfangsschaltung 4 verarbeitet in einem normalen Betriebsmodus das durchgeführte Empfangssignal und ermittelt daraus eine Information und gibt diese über einen Ausgang 6 weiter. Des Weiteren ermittelt die Empfangsschaltung 4 in einem Testmodus die Empfangsqualität wenigstens zweier Antennen 1, 2 und gibt die Empfangsqualitäten der zwei Antennen an die Steuereinheit 5 weiter. Die Steuereinheit 5 wählt nach festgelegten Parametern eine Antenne aus und stellt für den folgenden normalen Betriebsmodus den Auswahlschalter 3 in der Weise ein, dass das Empfangssignal der ausgewählten Antenne über den Auswahlschalter 3 an die Empfangsschaltung 4 weitergegeben wird. Abhängig von der gewählten Ausführung können auch alle Antennen überprüft werden.

Das beschriebene Verfahren wird für ein OFDM-Signal, d. h. für ein Orthogonal Frequency Division Multiplex-Signal eingesetzt. Dabei wird anstatt eines einzelnen Signalträgers eine große Zahl von Subträgern gleichzeitig moduliert und zur Übertragung der Informationen verwendet. Entsprechende OFDM-Signale werden beispielsweise bei DAB, DRM, WLAN, WMAX eingesetzt. Ein OFDM-Signal besteht aus mehreren OFDM-Symbolen. Mehrere OFDM-Symbole bilden jeweils einen Übertragungsrahmen.

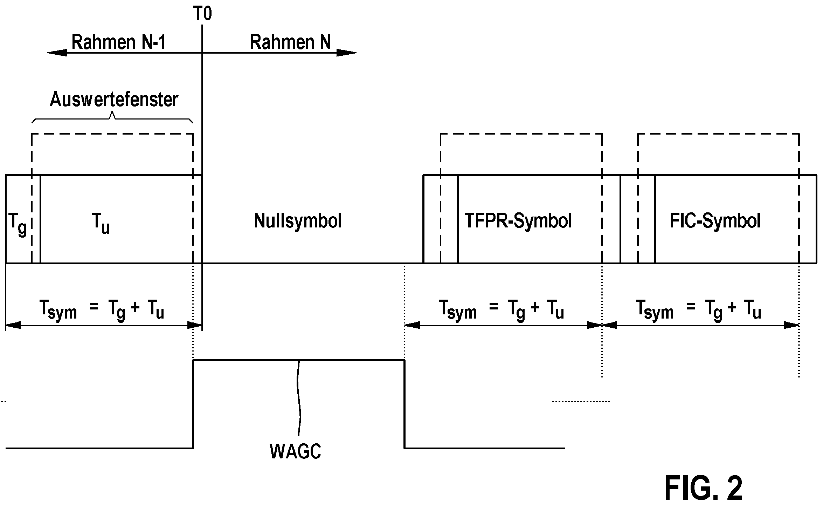

In Figur 2 ist ein Ausschnitt eines Zeitbereichs beim Wechsel von einem Übertragungsrahmen N-1 zum nächsten Übertragungsrahmen N dargestellt, wobei ein Rahmen N zum Zeitpunkt T0 beginnt. Als erstes Symbol wird ein sogenanntes Null-Symbol übertragen, das ein sogenanntes Rahmensynchronisationssymbol darstellt und dazu dient, grob den Rahmenanfang zu signalisieren. Anschließend wird ein weiteres Synchronisations-Symbol, das sogenannte TFPR-Symbol (Zeit-, Frequenz-, Phasenreferenzsymbol) übertragen, das eine genauere Feststellung der zeitlichen Lage des Übertragungsrahmens ermöglicht (Feinsynchronisation). Anschließend werden ein oder mehrere FIC-Symbol übermittelt, in denen eine Inhaltsinformation von nachfolgenden Nutzsymbolen bereitgestellt wird. Nach dem oder den FIC-Symbolen folgt eine vorbestimmte Anzahl von Nutzsymbolen, wobei aus Gründen der Übersichtlichkeit nur ein Nutzsymbol für den Übertragungsrahmen N-1 gezeigt ist.

Jedes OFDM-Symbol umfasst ein Nutzintervall T_{U}, in dem die Nutzdaten codiert übertragen werden, und ein Schutzintervall T_{g}, das zur Trennung der OFDM-Symbole voneinander dient. Das Schutzintervall T_{g} ist eine periodische Wiederholung eines Teils des Nutzintervalls T_{U}. Zeitlich gesehen ist das Schutzintervall immer vor einem Nutzintervall angeordnet. Das Schutzintervall ist vorgesehen, um Intersymbolinterferenzen bei der Mehrwegeausbreitung zu vermeiden, wenn verzögerte Echos bei einem Empfänger eintreffen. Intersymbolinterferenzen stören bei der Decodierung eines Signals.

Nach einer Rahmensynchronisation erfolgt im Empfänger zusätzlich eine Zeitsynchronisation. Hierbei wird ein Auswertefenster, das im wesentlichen der zeitlichen Dauer eines Nutzintervalls entspricht, in der Weise innerhalb der zeitlichen Dauer eines OFDM-Symbols, das das Nutzintervall und das Schutzintervall enthält, festgelegt, um Intersymbolinterferenzen zu vermeiden. Zwischen den Auswertefenstern für die einzelnen OFDM-Symbole sind jeweils Zeitspannen vorgesehen, in denen der Empfänger keine Datenauswertung durchführt. Die Zeitspannen entsprechen im wesentlichen der zeitlichen Länge eines Schutzintervalls T_{g}. Ein Aspekt der Erfindung besteht darin, diese Zeitspannen, die nicht für die Datenauswertung benötigt werden, wenigstens teilweise für die Ermittlung und/oder die Auswahl einer Antenne zu verwenden.

Die Empfangsschaltung 4 in Figur 1 weist einen analogen Tuner, einen A/D-Wandler und eine digitale Schaltung auf. Der Tuner filtert das Empfangssignal, verstärkt es und setzt es auf eine Zwischenfrequenz um. Der A/D-Wandler tastet das Empfangssignal ab, das dann in der digitalen Schaltung einer digitalen Signalverarbeitung zugeführt wird. Die digitale Signalverarbeitung besteht aus einer Filterung, Synchronisation, Demodulation, Kanaldecodierung usw. Weiterhin generiert der Empfänger ein Signal, das das zeitliche Ende des Auswertefensters anzeigt. Dieses Signal wird der Steuereinheit 5 zur Verfügung gestellt. Da zwischen den Auswertefenstern die für die Prüfung der Empfangsqualität der Antennen zur Verfügung stehenden Zeitspannen angeordnet sind, kann die Steuereinheit das Signal über das Ende des Auswertefensters als Steuersignal für die Prüfung und/oder das Umschalten zwischen den Antennen, deren Empfangssignal an die Empfangsschaltung 4 weitergeschaltet werden sollen, nutzen. Abhängig von der gewählten Ausführungsform kann das Steuersignal, das das Ende des Auswertefensters anzeigt, vom Empfänger nur einmal pro Übertragungsrahmen oder nach jedem Auswertefenster erzeugt und an die Steuereinheit 5 weitergegeben werden.

In einer weiteren Ausführungsform ermittelt die Empfangsschaltung 4 nur nach dem ersten Auswertefenster pro Übertragungsrahmen das Steuersignal, das das Ende des Auswertefensters anzeigt und übermittelt dieses an die Steuereinheit 5. Die Steuereinheit ermittelt dann selbstständig die folgenden Zeitspannen, die für die Prüfung der Empfangsqualität und/oder für das Umschalten zwischen den Antennen zur Verfügung stehen. Dies ist beispielsweise mit einem einfachen Taktzähler möglich, da die zeitlichen Abstände zwischen den Zeitspannen, die zwischen den Auswertefenstern liegen, konstant sind. Diese sind in einem Datenspeicher abgelegt, auf den die Steuereinheit 5 zugreifen kann. Zudem kennt die Steuereinheit 5 den Aufbau des Übertragungsrahmens, sodass auch die Anzahl der Auswertefenster pro Übertragungsrahmen bekannt sind.

Von einem Übertragungsrahmen zum nächsten Übertragungsrahmen kann sich das Auswertefenster verschieben, sodass es erforderlich sein kann, dass die Empfangsschaltung 4 wenigstens einmal pro Übertragungsrahmen ein Steuersignal für die zeitliche Position des Endes des Auswertefensters ermittelt. Weiterhin kann sich das Auswertefenster aufgrund einer Änderung der Zeitsynchronisation im Mehrwegekanal verschieben. Für diesen Fall kann beispielsweise ein DAB-Übertragungssystem (digital audio broadcast) ein WAGC-Signal genutzt werden, das typischerweise bei den entsprechenden Empfangsschaltungen 4 des DAB-Systems bereits vorhanden ist, um ein Null-Symbol und damit eine zeitliche Lage des Datenrahmens zu kennzeichnen.

In Figur 2 ist das Null-Symbol dargestellt, das jedes Mal zu Beginn eines Übertragungsrahmens mitübertragen wird. Das Wartesignal WAGC liegt in der Regel während der Zeitdauer eines Null-Symbols an, bzw. endet kurz vor dem Ende des 0-Symbols. Somit kann das Wartesignal zur Festlegung der zeitlichen Position des Übertragungsrahmens und damit zur Festlegung der zeitlichen Position die Auswertefenster verwendet werden. Eine fallende Flanke des Wartesignals WAGC ist zeitlich so festgelegt, dass sie exakt eine bekannte Symbollänge, die sich auch aus dem Nutzintervall und dem Schutzintervall zusammensetzt, vor dem Ende des ersten Zeitfensters für das erste OFDM-Symbol nach dem Null-Symbol liegt. Da sich die Zeitfenster bei OFDM-Symbolen gleicher Länger mit einer festen zeitlichen Periode wiederholen, kann anhand der fallenden Flanke des Wartesignals WAGC der Zeitpunkt des Endes jeden Zeitfensters bestimmt werden, indem zu dem Zeitpunkt der fallenden Flanke des Wartesignals Vielfache der Symbollängen addiert werden. Eine Synchronisation dieses Ablaufs kann jeweils zu Beginn eines Übertragungsrahmens mit dem Ende des Zustandes des Wartesignals stattfinden. Bei Kenntnis der Längen der einzelnen OFDM-Symbole in einem Übertragungsrahmen können auch unterschiedliche Zeitabstände zu dem Zeitpunkt der fallenden Flanke des Wartesignals hinzu addiert werden, um die Zeitpunkte zwischen den Zeitfenstern zu bestimmen. Ebenso kann vorgesehen sein, dass nicht jeder Zeitraum zwischen zwei Auswertefenstern zum Überprüfen der Empfangsqualitäten zweier Antennen und/oder zum Wechsel zwischen zwei Antennen verwendet werden.

Die Nutzdaten werden von der Empfangsschaltung 4 über den Ausgang 6 an eine nachfolgende Signalverarbeitung weitergereicht. Die Signalverarbeitung kann im wesentlichen dazu dienen, die Nutzdaten in eine Klang- oder Bildausgabe umzuwandeln.

Zur Beurteilung der Empfangsqualität können verschiedene Parameter des Empfangssignals verwendet werden. Beispielsweise kann der Empfangspegel eines Empfangssignals erfasst werden und die Antenne als beste Antenne bewertet werden, deren Empfangspegel für das Empfangssignal am größten ist. Der Empfangspegel kann als analoges Signal im Tuner oder in der Antenne oder in der digitalen Signalverarbeitung nach dem A/D-Wandler gemessen werden. Zweiteres ist genauer und zuverlässiger. Die Bestimmung des Empfangspegels kann relativ zwischen den Antennen bewertet werden. Dabei sollte der analoge Tuner eine konstante Verstärkung liefern. Zur Bestimmung des absoluten Empfangspegels muss die aktuelle Verstärkung des Tuners bestimmt werden. Dies ist möglich bei Tunern mit diskret schaltbaren Verstärkerstufen. Der für jede Antenne aktuelle Verstärkungswert kann anschließend in die Empfangspegelberechnung einbezogen werden.

Beispielsweise werden zur Überprüfung der Empfangsqualität während eines Testmodus die Antennen nacheinander mit der Empfangsschaltung 4 verbunden und ein Parameter des Empfangssignals der entsprechenden Antenne, beispielsweise der Empfangspegel des von der Antenne empfangenen Signals erfasst. Die während des Testmodus überprüften Antennen und deren überprüfte Parameter werden an die Steuereinheit 5 weitergegeben. Die Steuereinheit 5 ermittelt nach einer festgelegten Vorschrift die beste Antenne. Bei der Auswertung der Empfangspegel wird die Antenne mit dem größten Empfangspegel von der Steuereinheit 5 ausgewählt und der Auswahlschalter 3 in der Weise angesteuert, dass die ausgewählte Antenne mit der Empfangsschaltung 4 verbunden ist.

Die Überprüfung der Antennen oder die Auswahl der Antenne wird beispielsweise zwischen zwei Nutzsignalen während eines Schutzintervalls ausgeführt. Abhängig von der gewählten Ausführungsform kann die Überprüfung auch nur einmal, beispielsweise zu Beginn eines Übertragungsrahmens, durchgeführt werden.

Abhängig von der gewählten Ausführung wird der Testmodus und das Umschalten auf eine ausgewählte Antenne nur während eines Schutzintervalls durchgeführt.

In einer weiteren Ausführungsform berücksichtigt die Steuereinheit 5 noch weitere Kriterien zur Bewertung der einzelnen Antennen, wie z. B. der Leistung in einem Nachbarkanal, die einen störenden Einfluss hat. Somit kann es vorkommen, dass nicht die Antenne mit dem größten Empfangspegel als optimale Antenne ausgewählt wird, wenn Nachbarkanäle hohe störende Leistungen in das Empfangssignal der Antenne einbringen. Weiterhin kann es vorkommen, dass eine Antenne mit einem geringeren Empfangspegel ausgewählt wird, wenn deren Nachbarkanäle geringere störende Leistung in das Empfangssignal der Antenne einbringen. Die Bestimmung der Nachbarkanalleistung kann in der digitalen Signalverarbeitung erfolgen. Hierzu gibt es verschiedene Methoden. Eine Möglichkeit ist es, das empfangene Signal mit verschiedenen Bandbreiten zu filtern, wobei einmal nur das Nutzsignal auf der Empfangsfrequenz bewertet wird und einmal dass ein Teil des Nachbarkanals mit bewertet wird. Über das Verhältnis der Leistungen kann auf die Leistung des Nachbarkanals rückgeschlossen werden.

In einer weiteren Ausführungsform wird die Empfangsqualität der Antennen, deren Datensignal nicht von der Empfangsschaltung 4 verarbeitet wird, nur dann überprüft, wenn die Empfangsqualität der Antenne, deren Empfangssignal von der Empfangsschaltung 4 verarbeitet wird unter einem festgelegten Wert liegt. Beispielsweise kann der Empfangspegel der ausgewählten Antenne unter einem Grenzwert liegen. Ist dies der Fall, so wird nach einer Antenne mit einer besseren Empfangsqualität gesucht. Als weiterer Parameter für die Empfangsqualität kann eine Bitfehlerrate des decodierten Empfangssignals verwendet werden. Liegt die Bitfehlerrate über einem Grenzwert, so liegt eine schlechte Empfangsqualität vor. Dann wird nach einer Antenne mit einer besseren Empfangsqualität gesucht.

## Patentansprüche

1. Verfahren zum Empfangen eines Datensignals mit mehreren Antennen, wobei das Datensignal einen Übertragungsrahmen mit wenigstens einem Schutzintervall und einem folgenden Nutzintervall für Nutzdaten aufweist, wobei Empfangsqualitäten wenigstens zweier Antennen überprüft werden und eine Antenne mit besserer Empfangsqualität ausgewählt wird, wobei das Empfangssignal der ausgewählten Antenne verarbeitet wird, um aus dem Empfangssignal der ausgewählten Antenne ein Ausgangssignal zu ermitteln, wobei die Überprüfung der Empfangsqualität wenigstens teilweise während des Schutzintervalls durchgeführt wird, **dadurch gekennzeichnet, dass** aus dem Datensignal eine Information über eine zeitliche Lage des Nutzintervalls ermittelt wird und dass abhängig von der zeitlichen Lage des Nutzintervalls eine zeitliche Lage des Schutzintervalls ermittelt wird.

2. Verfahren nach Anspruch 1, wobei als Datensignal ein OFDM-Signal verwendet wird.

3. Verfahren nach einem der Ansprüche 1 oder 2, wobei die Überprüfung bei jedem Schutzintervall durchgeführt wird.

4. Verfahren nach einem der Ansprüche 1 bis 3, wobei bei der Überprüfung der Empfangsqualität alle Antennen überprüft werden.

5. Verfahren nach einem der Ansprüche 1 bis 4, wobei als Empfangsqualität eine Größe eines Empfangspegels des Empfangssignals der Antenne verwendet wird und als Antenne mit besserer Empfangsqualität die Antenne mit dem größeren Empfangspegel ausgewählt wird.

6. Verfahren nach einem der Ansprüche 1 bis 5, wobei bei der Auswahl der Antenne mit der besseren Empfangsqualität auch ein Störsignal wenigstens einer der anderen Antennen berücksichtigt werden.

7. Verfahren nach einem der Ansprüche 1 bis 6, wobei zeitliche Abstände zwischen Schutzintervallen während eines Übertragungsrahmens im wesentlichen konstant sind, wobei die zeitliche Lage eines Nutzintervalls ermittelt wird und die zeitlichen Lagen der folgenden Nutzintervalle aus bekannten zeitlichen Abständen berechnet werden.

8. Verfahren nach einem der Ansprüche 1 bis 7, wobei das Signal der ausgewählten Antenne verstärkt wird, wobei die Verstärkung abhängig von einem ermittelten Empfangspegel des Empfangssignals der Antenne eingestellt wird.

9. Schaltungsanordnung für die Verarbeitung eines Datensignals, das von mehreren Antennen (1, 2) empfangen wird, mit einer Empfangsschaltung (4), mit einer Steuereinheit (5), wobei die Empfangsschaltung (4) über einen Auswahlschalter (3) mit wenigstens einer Antenne (1, 2) verbindbar ist, wobei die Empfangsschaltung (4) mit der Steuereinheit (5) verbunden ist, wobei die Steuereinheit (5) mit dem Auswahlschalter (3) verbunden ist, wobei das Datensignal einen Übertragungsrahmen mit wenigstens einem Schutzintervall und einem folgenden Nutzintervall mit Nutzdaten aufweist, wobei die Steuereinheit (5) Empfangsqualitäten wenigstens zweier Antennen (1, 2) überprüft und eine Antenne (1, 2) mit besserer Empfangsqualität auswählt, wobei die Steuereinheit (5) den Auswahlschalter (3) in der Weise ansteuert, dass das Empfangssignal der ausgewählten Antenne (1, 2) an die Empfangsschaltung (4) weitergeleitet wird, wobei das Empfangssignal der ausgewählten Antenne (1, 2) von der Empfangsschaltung (4) verarbeitet wird, um aus den Nutzdaten ein Ausgangssignal zu ermitteln, wobei die Steuereinheit (5) die Überprüfung der Empfangsqualität wenigstens teilweise während des Schutzintervalls durchführt, **dadurch gekennzeichnet, dass** die Steuereinheit (5) aus dem Datensignal eine Information über eine zeitliche Lage des Nutzintervalls ermittelt und abhängig von der zeitlichen Lage des Nutzintervalls eine zeitliche Lage des Schutzintervalls ermittelt.

## Claims

1. Method for receiving a data signal using multiple antennas, wherein the data signal has a transmission frame having at least one guard interval and a subsequent user interval for user data, wherein reception qualities of at least two antennas are checked and an antenna having better reception quality is selected, wherein the received signal from a selected antenna is processed in order to ascertain an output signal from the received signal from the selected antenna, wherein the check on the reception quality is performed at least in part during the guard interval, **characterized in that** a piece of information about a temporal position of the user interval is ascertained from the data signal and **in that** the temporal position of the user interval is taken as a basis for ascertaining a temporal position of the guard interval.

2. Method according to Claim 1, wherein the data signal used is an OFDM signal.

3. Method according to either of Claims 1 and 2, wherein the check is performed for every guard interval.

4. Method according to one of Claims 1 to 3, wherein the check on the reception quality involves all antennas being checked.

5. Method according to one of Claims 1 to 4, wherein the reception quality used is a magnitude of a reception level of the received signal from the antenna, and the antenna having better reception quality that is selected is the antenna having the higher reception level.

6. Method according to one of Claims 1 to 5, wherein the selection of the antenna having the better reception quality also takes account of an interference signal from at least one of the other antennas.

7. Method according to one of Claims 1 to 6, wherein intervals of time between guard intervals are essentially constant during a transmission frame, the temporal position of one user interval being ascertained and the temporal position of the subsequent user intervals being computed from known intervals of time.

8. Method according to one Claims 1 to 7, wherein the signal from the selected antenna is amplified, the gain being set on the basis of an ascertained reception level of the received signal from the antenna.

9. Circuit arrangement for processing a data signal that is received by multiple antennas (1, 2), having a reception circuit (4), having a control unit (5), wherein the reception circuit (4) is connectectable to at least one antenna (1, 2) via a selector switch (3), wherein the reception circuit (4) is connected to the control unit (5), wherein the control unit (5) is connected to the selector switch (3), wherein the data signal has a transmission frame having at least one guard interval and a subsequent user interval having user data, wherein the control unit (5) checks reception qualities of at least two antennas (1, 2) and selects an antenna (1, 2) having better reception quality, wherein the control unit (5) actuates the selector switch (3) such that the received signal from the selected antenna (1, 2) is forwarded to the reception circuit (4), wherein the received signal from the selected antenna (1, 2) is processed by the reception circuit (4) in order to ascertain an output signal from the user data, wherein the control unit (5) performs the check on the reception quality at least in part during the guard interval, **characterized in that** the control unit (5) ascertains a piece of information about a temporal position of the user interval from the data signal and takes the temporal position of the user interval as a basis for ascertaining a temporal position of the guard interval.

## Revendications

1. Procédé pour recevoir un signal de données avec plusieurs antennes, le signal de données possédant une trame de transmission comportant au moins un intervalle de garde et un intervalle utile suivant pour des données utiles, les qualités de réception d'au moins deux antennes étant contrôlées et une antenne ayant la meilleure qualité de réception étant sélectionnée, le signal reçu de l'antenne sélectionnée étant traité afin de déterminer un signal de sortie à partir du signal reçu de l'antenne sélectionnée, le contrôle de la qualité de réception étant effectué au moins partiellement pendant l'intervalle de garde, **caractérisé en ce qu'**une information à propos d'une position dans le temps de l'intervalle utile est déterminée à partir du signal de données et **en ce qu'**une position dans le temps de l'intervalle de garde est déterminée à partir de la position dans le temps de l'intervalle utile.

2. Procédé selon la revendication 1, un signal OFDM étant utilisé comme signal de données.

3. Procédé selon l'une des revendications 1 ou 2, le contrôle étant effectué à chaque intervalle de garde.

4. Procédé selon l'une des revendications 1 à 3, la qualité de réception de toutes les antennes étant contrôlée lors du contrôle.

5. Procédé selon l'une des revendications 1 à 4, une grandeur d'un niveau de réception du signal de réception de l'antenne étant utilisée comme qualité de réception et l'antenne ayant le niveau de réception le plus élevé étant sélectionnée comme antenne ayant la meilleure qualité de réception.

6. Procédé selon l'une des revendications 1 à 5, un signal parasite d'au moins l'une des autres antennes étant également pris en considération lors de la sélection de l'antenne ayant la meilleure qualité de réception.

7. Procédé selon l'une des revendications 1 à 6, les écarts dans le temps entre les intervalles de garde étant sensiblement constants pendant une trame de transmission, la position dans le temps d'un intervalle utile étant déterminée et les positions dans le temps de l'intervalle utile suivant étant calculées à partir des écarts dans le temps connus.

8. Procédé selon l'une des revendications 1 à 7, le signal de l'antenne sélectionnée étant amplifié, l'amplification étant réglée en fonction d'un niveau de réception déterminé du signal reçu de l'antenne.

9. Arrangement de circuit pour le traitement d'un signal de données qui est reçu par plusieurs antennes (1, 2), comprenant un circuit de réception (4), comprenant une unité de commande (5), le circuit de réception (4) pouvant être relié à au moins une antenne (1, 2) par le biais d'un commutateur de sélection (3), le circuit de réception (4) étant relié à l'unité de commande (5), l'unité de commande (5) étant reliée au commutateur de sélection (3), le signal de données possédant une trame de transmission comportant au moins un intervalle de garde et un intervalle utile suivant avec des données utiles, l'unité de commande (5) contrôlant les qualités de réception d'au moins deux antennes (1, 2) et sélectionnant une antenne (1, 2) ayant la meilleure qualité de réception, l'unité de commande (5) commandant le commutateur de sélection (3) de telle sorte que le signal reçu de l'antenne (1, 2) sélectionnée est retransmis au circuit de réception (4), le signal reçu de l'antenne (1, 2) sélectionnée étant traité par le circuit de réception (4) afin de déterminer un signal de sortie à partir des données utiles, l'unité de commande (5) effectuant le contrôle de la qualité de réception au moins partiellement pendant l'intervalle de garde, **caractérisé en ce que** l'unité de commande (5) détermine à partir du signal de données une information à propos d'une position dans le temps de l'intervalle utile et détermine une position dans le temps de l'intervalle de garde en fonction de la position dans le temps de l'intervalle utile.
